(19) Europäisches Patentamt
European Patent Office
Office européen des brevets

(11) EP 4 047 037 A1

(12) EUROPEAN PATENT APPLICATION

(43) Date of publication:
**24.08.2022 Bulletin 2022/34**

(21) Application number: **22153494.4**

(22) Date of filing: **26.01.2022**

(51) International Patent Classification (IPC):
*C08G 73/18* (2006.01) *H01M 8/083* (2016.01)
*H01M 8/103* (2016.01) *B01J 41/13* (2017.01)

(52) Cooperative Patent Classification (CPC):
**C08G 73/18; B01J 41/13; H01M 8/083; H01M 8/103;** B01D 2325/42

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2021 KR 20210011852**

(71) Applicants:
- **Korea Institute of Science and Technology Seoul 02792 (KR)**
- **Technion Research and Development Foundation Ltd. 3200003 Haifa (IL)**

(72) Inventors:
- **HENKENSMEIER, Dirk 02792 Seoul (KR)**
- **DEKEL, Dario 3200003 Haifa (IL)**
- **KIM, Hyoung-Juhn 02792 Seoul (KR)**
- **LEE, So Young 02792 Seoul (KR)**
- **JANG, Jong Hyun 02792 Seoul (KR)**
- **PARK, Hyun S. 02792 Seoul (KR)**
- **PARK, Hee-Young 02792 Seoul (KR)**
- **KONOVALOVA, Anastasiia 02792 Seoul (KR)**
- **TSOY, Ekaterina 02792 Seoul (KR)**
- **LEE, Yona 3200003 Haifa (IL)**

(74) Representative: **Gilani, Anwar**
**Venner Shipley LLP**
**Byron House**
**Cambridge Business Park**
**Cowley Road**
**Cambridge CB4 0WZ (GB)**

# (54) POLYMER GRAFTED WITH CATIONIC GROUPS AS SIDE CHAIN, PREPARATION METHOD THEREOF, AND ANION-EXCHANGE MEMBRANE PREPARED THEREFROM

(57) The present invention relates to a polymer grafted with cationic groups as a side chain, a preparation method thereof, an anion-exchange membrane prepared therefrom, and use thereof. The polymer comprises a polymer backbone based on polybenzimidazole or a derivative thereof, wherein 1% to 90% of the -NH- groups contained in the polymer backbone are substituted with a side chain comprising a cationic group; and the remaining 50% or ore of the -NH- groups, which are not substituted with a side chain comprising a cationic group, among the -NH- groups contained in the polymer backbone, are substituted with a hydrocarbon chain that does not comprise any heteroatom of O, N, P or S.

[Fig. 1]

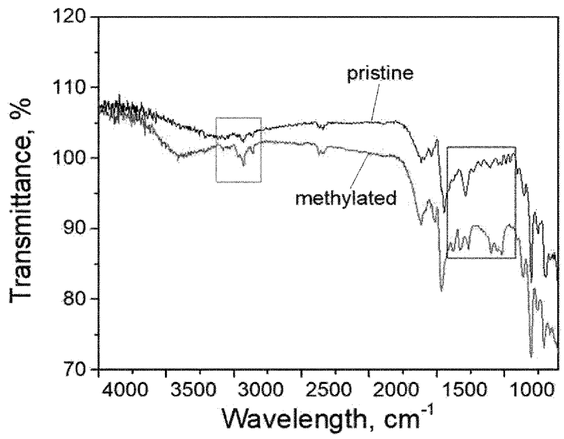


EP 4 047 037 A1

## Description

### [Technical Field]

The present invention relates to a polymer grafted with cationic groups as a side chain, a preparation method thereof, an anion-exchange membrane prepared therefrom, and use thereof.

### [Background Art]

Anion-exchange membranes (AEMs) can be used in many applications, such as fuel cells, electrolyzers, flow batteries, zinc-air batteries, *etc.* They separate the anode and cathode, and prevent crossover of the fuel and oxidant in fuel cells, the redox-active species in batteries, and hydrogen and oxygen in electrolyzers. At the same time, they transport hydroxide ions to the opposite electrode.

The low alkaline stability of polymer-based AEMs has been researched intensively. Generally, degradation of cationic groups can occur at the backbone and/or at the functional group of polymers due to hydroxide ions in a basic environment. Degradation of polymer backbones leads to chain scission, thereby decreasing the molecular weight. This results in increased brittleness of the membrane, and such phenomenon is especially pronounced in the presence of ether groups. In particular, hydroxide-induced degradation can easily occur in basic environments because polymers like PEEK, PESU, polyphenylene oxide (PPO) *etc.* contain ether groups at the backbone.

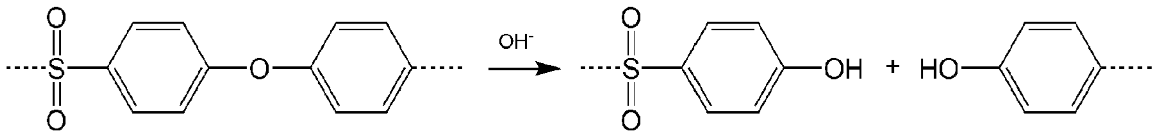


Therefore, anion-conducting polymers which do not have oxygen in the backbone have been developed and are now commercially available, *e.g.*, Sustainion from Dioxide Materials, TM1 from Orion Polymers, Aemion from Ionomr, *etc.* Specifically, Sustainion membranes are based on a polystyrene backbone and are functionalized with imidazolium ions. The clear advantage of this product is the low cost of polystyrene. However, the drawback is that the membranes are very brittle in the dry state, and fail easily during handling or even when assembled in an electrolyzer if the feed solution is removed. For this reason, Sustainion is also more suitable for electrolyzers than for fuel cells. Meanwhile, TM1 membranes are flexible, and can be used in both fuel cells and electrolyzers. However, their synthesis process is based on expensive monomers (1,1,1-trifluor-7-bromo-2-heptanone).

In another example, methylated polybenzimidazole (PBI) is not alkaline-stable unless the linking phenyl groups have methyl groups at both *ortho-* positions of the imidazolium ion. In this case, steric hindrance can very effectively prevent hydroxide ions from attacking the C2-position of the imidazolium ion. The drawback of such polymers is that the monomers are not yet commercially available, and need to be synthesized in a multi-step synthesis. Meanwhile, it could also be expected that the steric hindrance, which is needed for alkaline stability of the product, would prevent build-up of molecular weight of the polymer during synthesis, unless the process is well optimized.

Another approach using polybenzimidazole (PBI) is to use commercial *meta*-PBI, which is widely used as fibers for protective clothes for firefighters, and is therefore industrially available at the price of 0.67 USD/g. In order to use PBI as an anion-exchange membrane, PBI needs to be functionalized with ammonium groups. This can be done by reacting PBI with an ammonium (imidazolium, *etc.*)-containing compound. However, it has been reported that oxidation of phenyl rings close to the electrode leads to formation of phenol groups. Because such groups are slightly acidic, they may react with the hydroxide ions of the quaternary ammonium groups, resulting in ammonium phenolates, in which both cation and anion are bond to the polymer, and thus the loss of conductive ions may be induced. Further, since PBI carries protonic NH groups, it can be expected that these groups can interfere in a similar way with the hydroxide ions. A similar but less strong interaction can also be assumed for chloride (bromide, *etc.*)-exchanged polymers. Here, the cationic groups could potentially interact with the free electron pair of the imidazole imine group. Even if these interactions only have a minor role, they could lead to crosslinking points if more than one polymer chain was involved. Crosslinks are known to reduce the water uptake of polymers. Since conductivity and water uptake are closely related, it is expected that this crosslinking can reduce the conductivity. This crosslinking interaction may also interfere with the formation of well-connected ionic clusters, which are necessary for high conductivity.

In order to solve the described problems, He *et al.* suggested pre-removal of all protonic sites by first reacting all NH groups with a chloromethyl-terminated ethyleneoxide chain, and then reacting the remaining chloromethyl groups with suitable tertiary amines. This approach led to a significant increase in conductivity (J. Power Sources, 2020, 451:227813).

However, even though the described approach is attractive, it has the disadvantage that a large excess of the chloromethyl-terminated ethyleneoxide chain needs to be used to prevent crosslinking. For example, He *et al.* described that 1 g of PBI (5 mmol NH) should be reacted with 30 g (160 mmol) of 1,2-bis(2-chloroethoxy)ethane, and the reaction efficiency is significantly decreased as 97% of the reagent 1,2-bis(2-chloroethoxy)ethane is lost in the subsequent process. Therefore, there is a need to find more efficient ways to block the NH groups.

**[Prior Art]**

**[Non-Patent References]**

(Non-Patent Reference 1) J. Polym. Sci., Part A: Polym. Chem., 1993, 31(2):553-561,
(Non-Patent Reference 2) J. Power Sources, 2020, 451:227813,
(Non-Patent Reference 3) Polymer, 2019, 174:210-217.

**[Disclosure]**

**[Technical Problem]**

The present inventors have made extensive efforts to find a PBI-based polymer material that can be used in various electrochemical systems, and as a result, they have confirmed that the membrane made of a polymer, in which some of the -NH- groups contained in the PBI polymer backbone are substituted with a side chain including a cationic group, and the remaining -NH- groups are substituted with a hydrocarbon chain that does not include any heteroatom, have dimensional stability due to improved anion conductivity and reduced water uptake compared to a membrane made of a non-alkylated polymer, thereby completing the present invention.

**[Technical Solution]**

Each description and embodiment disclosed herein can be applied to other descriptions and embodiments, respectively. That is, all combinations of various elements disclosed herein fall within the scope of the present invention. In addition, the scope of the present invention is not limited by the specific description described below.
Additionally, those of ordinary skill in the art may be able to recognize or confirm, using only conventional experimentation, many equivalents to the particular aspects of the invention described herein. Furthermore, it is also intended that these equivalents be included in the present invention.
Further, throughout the specification, unless explicitly described to the contrary, the terms "comprise" and "include" and variations such as "comprises" and "includes" or "comprising" and "including" will be understood to imply the inclusion of stated elements but not the exclusion of any other elements.
Hereinafter, the present invention will be described in detail.
The present invention, which has been designed to solve the problem of membrane swelling during wet driving due to increased water uptake along with the increase in conductivity when modifying the existing ion-conductive polymer membrane to improve conductivity for application to electrochemical systems, is based on the finding that the anion conductivity is increased by introducing a side chain comprising a cationic group into one part of the -NH- groups and a hydrocarbon chain that does not comprise a heteroatom to the other part of the - NH- groups contained in a polymer backbone based on polybenzimidazole or a derivative thereof, while significantly decreasing water uptake, thereby providing a membrane having increased conductivity and dimensional stability.
One aspect of the present invention provides a polymer comprising a polymer backbone based on polybenzimidazole or a derivative thereof, wherein 1% to 90% of the -NH- groups contained in the polymer backbone are substituted with a side chain comprising a cationic group; and the remaining 50% or more of the -NH-groups, which are not substituted with a side chain comprising a cationic group, among the -NH- groups contained in the polymer backbone, are substituted with a hydrocarbon chain that does not comprise any heteroatom of O, N, P, or S.
Specifically, the PBI-based polymer may be a polymer further comprising $C_{6-14}$ aryl or $C_{5-10}$ heteroaryl unsubstituted or substituted with at least one selected from the group consisting of hydroxy, $C_{1-4}$ alkyl, and a sulfonic acid group at the backbone or side chain of the polymer comprising benzimidazole unsubstituted or wholly or partially substituted with $C_{1-4}$ alkyl on a nitrogen atom.
More specifically, the PBI-based polymer may be at least one selected from the group consisting of *meta*-PBI, *para*-PBI, *meta*/*para*-PBI, ab-PBI, poly[2,2'-(2,2",4,4",6,6"-hexamethyl-*p*-terphenyl-3,3"-diyl)-5,5'-bibenzimidazole] (HMT-PBI), 2OHPBI, O-PBI, PBI-OO, PBI-HFA, PBI-OH, sulfonated *para*-PBI, mesityl-PBI, terphenyl-PBI, hexamethyl-*p*-terphenyl PBI, a mixture thereof, or a copolymer thereof. Even more specifically, the PBI-based polymer may be *meta*-PBI, *para*-PBI, *meta*/*para*-PBI, ab-PBI, mesityl-PBI, or HMT-PBI, but is not limited thereto.

For example, the polymer of the present invention may be an anion-conductive polymer. In particular, by introducing a hydrocarbon chain that does not comprise any heteroatom, the polymer may exhibit increased anion conductivity compared to a polymer that does not comprise any heteroatom.

In a specific embodiment of the present invention, it was confirmed that the membrane made of a polymer, in which the residual -NH- group is further methylated, showed increased conductivity for a series of anionic species as compared to a membrane made of a polymer introduced with a side chain comprising an alkylene-linked benzimidazolium as a side chain comprising a cationic group into some of the -NH- groups of the PBI polymer backbone (Table 1).

For example, the side chain comprising a cationic group may comprise one or more unsubstituted or substituted imidazolium or quaternary ammonium group.

Furthermore, the side chain comprising a cationic group may be a chain to which one or more of imidazolium, quaternary ammonium, or a combination thereof are directly linked; or one or more of imidazolium, quaternary ammonium, or a combination thereof are linked through $C_{1-6}$ alkyl or $C_{6-10}$ aryl-$C_{1-4}$ alkyl, but is not limited thereto.

Here, the side chain comprising a cationic group may comprise a halogen atom, which is substituted at one or both ends and allows intramolecular or intermolecular crosslinking, but is not limited thereto.

Meanwhile, the hydrocarbon chain may be $C_{1-6}$ alkyl or $C_{6-10}$ aryl-$C_{1-4}$ alkyl, and may specifically be methyl, but is not limited thereto. When methyl is selected as the hydrocarbon chain, due to its small size, it has little effect on the physical properties of the polymer, such as reducing the ion-exchange capacity of the polymer to which the hydrocarbon chain is introduced, and can react more quickly.

A second aspect of the present invention provides a membrane comprising the polymer of the first aspect.

Here, the membrane may be conductive to anions, but is not limited thereto. Accordingly, the membrane of the present invention may be applied to various electrochemical systems due to its conductivity to anions.

A third aspect of the present invention provides a method for preparing the polymer of the first aspect, comprising: a first step, in which a side chain comprising a cationic group or a hydrocarbon chain that does not comprise any heteroatom of O, N, P, or S is introduced into the -NH- groups contained in the polymer backbone in the polymer based on polybenzimidazole or a derivative thereof; and a second step, in which a hydrocarbon chain that does not comprise any heteroatom of O, N, P, or S or a side chain comprising a cationic group is introduced into the remaining - NH- groups, among the -NH- groups contained in the polymer backbone, which are not substituted with the side chain comprising a cationic group or the hydrocarbon chain that does not comprise any heteroatom of O, N, P, or S.

For example, the preparation method of the present invention may be performed in a sequence: a first' step, in which a side chain comprising a cationic group is introduced into the -NH- groups contained in the polymer backbone in the polymer based on polybenzimidazole or a derivative thereof; and a second' step, in which a hydrocarbon chain that does not comprise any heteroatom of O, N, P, or S is introduced into the remaining -NH- groups, among the -NH- groups contained in the polymer backbone, which are not substituted with the side chain including a cationic group, but is not limited thereto.

For example, it may be advantageous to introduce the side chain comprising a cationic group introduced into the polymer of the present invention before the hydrocarbon chain, which can relatively easily access to the bonding site, in order to increase the rate and/or efficiency of the reaction, because it has a relatively large size compared to the hydrocarbon chain introduced therewith, but this is not limited thereto. For example, the precedence relationship of the reaction can be appropriately selected by those skilled in the art considering the size or reactivity of the substituents, reaction conditions, *etc*.

For example, the hydrocarbon chain that does not include any heteroatom of O, N, P, or S may be introduced into 50% or more of the remaining -NH- groups by the second' step, but is not limited thereto.

Meanwhile, the introduction of a side chain comprising a cationic group into group into the -NH- groups contained in the polymer backbone may be performed by reacting a polymer based on polybenzimidazole or a derivative thereof with a compound, in which a reactive halide is substituted at one or both ends of a side chain comprising a cationic group, but is not limited thereto, and relevant reactions known in the art can be appropriately cited or modified for application.

Specifically, the introduction of a side chain comprising a cationic group into the -NH- groups contained in the polymer backbone may be performed by reacting at a temperature of 50°C to 140°C in a solution state dissolved in an organic solvent, but is not limited thereto.

For example, the compound, in which a reactive halide is substituted at one or both ends of the side chain comprising a cationic group used in the preparation method of the present invention, may be a monomer or oligomer prepared by reacting one or more of imidazole, secondary amine, or a combination thereof with dihalo-$C_{1-6}$ alkane or dihalo($C_{6-10}$ aryl-$C_{1-6}$ alkane), but is not limited thereto.

For example, the second' step may be performed by reacting the polymer, which is obtained from the first' step, with a halogenated hydrocarbon compound that does not comprise any heteroatom of O , N, P, or S in an amount of

one equivalent or more based on the dry weight of the polymer under a basic condition, but is not limited thereto.

A fourth aspect of the present invention provides electrochemical systems equipped with the membrane of the second aspect.

Specifically, the electrochemical systems may be electrolyzers, fuel cells, or batteries, but are not limited thereto. For example, since the membrane of the present invention is conductive to anions, in order to separate the anode and cathode in general electrochemical systems, the membrane may be provided as a separator to prevent crossover of the fuel and oxidant in fuel cells, the redox-active species in batteries, and hydrogen and oxygen in electrolyzers.

**[Advantageous Effects]**

The PBI-based novel polymer of the present invention improves anion conductivity by introducing a side chain comprising a cationic group and a hydrocarbon chain through the -NH- groups contained in the backbone, while reducing water uptake and thereby providing a membrane with improved dimensional stability, and thus can be used as a separator material in various electrochemical systems.

**[Brief Description of Drawing]**

Fig. 1 is a diagram showing attenuated total reflectance (ATR) Fourier-Transform infrared (FT-IR) spectroscopy spectra of a methylated membrane and a pristine membrane before methylation according to one embodiment of the present invention. The new bands appearing near 3000 $cm^{-1}$ and 1250-1500 $cm^{-1}$ resemble the spectra reported for monomethylated PBI (J. Polym. Sci., Part A: Polym. Chem., 1993, 31(2):553-561).

**[Detailed Description of Preferred Embodiments]**

The present invention will be described in more detail by way of Examples. However, these Examples are provided for illustrative purposes only, and the scope of the invention is not intended to be limited to or by these Examples.

**Preparation Example 1: Preparation of 2-mesityl-benzimidazole (Blm)**

2,4,6-Trimethylbenzoic acid (20.0258 g, 122 mmol) and *ortho*-phenylenediamine (13.1723 g, 122 mmol) were mixed in PPA (60 g) in a three-neck round bottom flask and stirred for 2 hours under an argon atmosphere at 200°C. The mixture was cooled to 80°C, and the viscosity of the solution was reduced by adding 3 mL of phosphoric acid and deionized (DI) water. Later, the solution was poured into a 7 wt.% KOH solution and magnetically stirred for 48 hours for complete precipitation. The obtained precipitate was boiled in DI water overnight and dried in a vacuum oven at 60°C for 72 hours after the filtration. The thus-obtained product was characterized by $^1H$ NMR (400 MHz, DMSO-$d_6$).

$^1H$ NMR (DMSO-$d_6$, ppm): d = 12.35 (br s, 1H, NH), 7.71-7.62 (m, 1H), 7.50 (dd, $J$ = 2.0 Hz, 6.6 Hz, 1H), 7.25-7.16 (m, 2H), 7.00-6.93 (d, 1H, mesityl CH), 2.33 (s, 3H, para-methyl), 2.09 (s, 6H, *ortho*-methyl).

**Preparation Example 2: Preparation of 1-bromohexyl-2-mesityl-3-methyl-benzimidazolium bromide (Brhex-Blm-Me)**

Blm (13.003 g, 55 mmol) prepared according to Preparation Example 1 and NaH (2.421 g, 60.5 mmol) were dissolved in anhydrous DMAc (80 mL) in an ice bath. Iodomethane (3.44 mL, 60.6 mmol) was added dropwise, and the mixture was stirred for 1 hour. 1,6-Dibromohexane (33.86 mL, 220 mmol) was added to the solution, and then the temperature was raised to 80°C and maintained for 5 hours. After cooling to room temperature, the mixture was precipitated in ethyl acetate. The resulting powder was filtered and dried in a vacuum oven at 60°C for 72 hours. The thus-obtained product was characterized by HRMS.

HRMS *m/z* for $C_{23}H_{30}BrN_2$ $[M]^+$ = 413.1592, 415.1575 (calculated: 413.1636, 415.1568).

**Preparation Example 3: Preparation of PBI-hex-Blm**

PBI powder (2.073 g, 6.7 mmol) was dissolved in anhydrous DMSO (40 mL). Then, NaH (0.807 g, 20.1 mmol) was added to the mixture and stirred until fully dissolved. Separately, Brhex-Blm-Me (8.36 g, 20 mmol) prepared according to Preparation Example 2 above was dissolved in 40 mL of anhydrous DMSO. After the PBI solution was heated to 80°C, the Brhex-Blm-Me solution was added in three portions over 48 hours. After an additional 24 hours of stirring, the reaction mixture was cooled and precipitated in acetone. The thus-obtained polymer was filtrated and purified by Soxhlet extraction with methanol to remove unreacted monomer.

**Preparation Example 4: Preparation of PBI-hex-BIm membrane**

PBI-hex-BIm membranes were prepared by casting a hot DMSO solution on a hot glass plate with a doctor blade (500 μm gap width). The membranes were slowly dried in an oven at 90°C for 1 hour in order to slowly evaporate the main portion of the solvent. Afterwards, vacuum was applied, and the membranes were dried overnight at 90°C.

**Example 1: Methylation of PBI-hex-BIm membrane**

PBI-hex-BIm membrane pieces were immersed in a slightly alkaline solution with at least one equivalent of iodomethane based on a dry weight of the polymer. Dry membrane strips (4 cm × 1 cm) were immersed in the solution for at least one week in a tightly sealed vial until the $CH_3I$ phase vanished.

**Example 2: Ionic conductivity measurement of non-methylated or methylated PBI-hex-BIm membranes**

In-plane ionic conductivity was calculated from membrane resistance measured by CV (current-voltage curve) in a platinum four-electrode cell equipped with an analyzer IM6 (Zahner Elektrik) in galvanostatic mode. The measurement was conducted in DI water at room temperature in an immersed state. Before the test, all of the membranes were converted to chloride, carbonate, and bicarbonate forms consecutively and measured in each respective form afterwards. The conductivity was calculated from the following equation:

$$\sigma = \frac{S \cdot D}{t} (S\ cm^{-1})$$

Where σ is conductivity of the membrane, *S* is the slope of the CV curve, *D* is the standard distance between two electrodes (0.425 cm), and *t* is the thickness of the membrane. The ionic conductivities for various anions of pristine PBI-hex-BIm and methylated PBI-hex-BIm membrane calculated from the equation were shown in Table 1 below.

[Table 1]

| Membrane | $CO_3^{2-}$, mS/cm | $HCO_3^-$, mS/cm | $Cl^-$, mS/cm |
|---|---|---|---|
| Pristine PBI-hex-BIm | 0.59 | 0.87 | 0.51 |
| Methylated PBI-hex-BIm | 0.64 | 3.35 | 0.65 |

As shown in Table 1, the methylated PBI-hex-BIm membrane showed higher conductivity for all anionic species tested compared to the pristine PBI-hex-BIm membrane.

**Example 3: Water uptake measurement of non-methylated or methylated PBI-hex-BIm membranes**

Chloride-exchanged membranes were immersed in water (wet weight) and then dried (dry weight) to measure the water uptake. The water uptake (dry → wet) based on these two values is shown in Table 2.

[Table 2]

| Membrane | Water Uptake, % |
|---|---|
| Pristine PBI-hex-BIm | 31.1±5.1 |
| Methylated PBI-hex-BIm | 15.3±1.8 |

The methylated membranes have lower water uptake, and this indicates that the membranes were not permethylated (methylation of all nitrogen groups, leading to positively charged imidazolium groups), but only the more reactive NH groups reacted, and the less reactive imine groups did not react. For a given membrane, conductivity generally increases with water uptake. However, with reference to Tables 1 and 2 above, the pristine and methylated membranes of the present invention showed different patterns. Specifically, the methylated membrane showed an increased ionic conductivity despite half the water uptake compared to the pristine membrane, and this indicates that the pristine and methylated membranes are of two different materials. Here, the higher conductivity for monomethylated membranes indicates that free mobility of the anions (*e.g.*, less interaction with the polymer) is more relevant than the

water uptake.

**Preparation Example 5: Preparation of 2-(2,6-dimethylphenyl)benzimidazole (2Me-BIm)**

20 g (113.18 mmol) of 2,6-dimethylbenzoic acid (1 equiv.), 14.40 g (113.18 mmol) of *ortho*-phenylenediamine (1 equiv.), and 60 g of polyphosphoric acid (PPA) (3× acid weight) were placed into a reaction flask and stirred by an overhead stirrer under argon conditions at 200°C for 2 hours. Then, the temperature was decreased to 120°C. After 30 minutes, the mixture was cooled to 60°C, and 5 mL of $H_3PO_4$ was added to make the solution less viscous. After cooling, the mixture was poured into an excess volume of water (3 liters), and KOH pellets were added till neutral pH (≈ 7-8) was reached. The mixture was magnetically stirred for approximately 24 hours to ensure complete precipitation. Then, the precipitate was filtered, rinsed with DI water, and then boiled in water for 48 hours. After that, the product was filtered, washed, and dried at 60°C under vacuum for 72 hours.

**Preparation Example 6: Preparation of oligomer with reactive endgroups**

An oligomer was synthesized by dissolving 2.1 g (8.883 mmol) of 2Me-BIm (1 equiv.) in 16 mL of anhydrous dimethyacetamide (DMAc) and stirring with a magnetic bar for 3 hours under an argon atmosphere at 25°C. Then, 0.3 g of NaH (60% in mineral oil) and 2 mL of DMAc were added to the mixture and stirred for 1 hour at 25°C. After this, 2.6 g (11.104 mmol) of α,α'-dibromo-*p*-xylene (1.25 equiv.) and 2 mL of DMAc were added, and the temperature was increased to 80°C. The solution was stirred for 48 hours and then the mixture was poured into acetone. The resulting product was washed, vacuum-filtered, and dried under vacuum over at 60°C for 24 hours.

**Preparation Example 7: Reaction of oligomer with PBI**

The reaction of the oligomer prepared according to Preparation Example 6 with mPBI was carried out in the following way. 1 g of mPBI was dissolved in 15 mL of DMA and stirred in the reaction flask with a magnetic bar under argon conditions for approximately 24 hours. In order to make the mixture less viscous, DMAc was added in small amounts (≈ 2-3 mL) at all steps. Then, 0.2 g of NaH, which was dissolved beforehand in 3 mL of DMAc, was poured into the flask. After 8 hours, 1 g of oligomer dissolved in 3 mL of DMAc was added and the mixture was stirred for 10 minutes. DMAc was added when the magnetic bar was not turning. The reaction solution was directly poured onto Petri dishes. The casting process was conducted in two steps. The Petri dishes were covered by other dishes or plates to prevent fast evaporation of DMAc, and the material was dried in an oven at 60°C without a vacuum for 48 hours. Then, the covers were removed, and the product was dried in a vacuum oven at 60°C for at least 24 hours. By immersing the product in DI water for several minutes, the samples of mPBI+oligomer were easily peeled from the glass surface.

**Example 4: Methylation of mPBI+oligomer**

Two 4 cm × 1 cm samples of mPBI+oligomer membrane prepared according to Preparation Examples 5 to 7 were punched and immersed in a mixture containing 0.5 mL of 1 M KOH, 30 mL of DI water, and a small amount of iodomethane, one for 4 days and the other one for 7 days.

**Example 5: Hydroxide conductivity measurement of non-methylated or methylated mPBI+oligomer membranes**

For conductivity measurements, pristine and methylated mPBI+oligomer membranes were used. Without any pre-treatment, all of the membranes were immersed in 20 mL flasks containing bicarbonate solution (1 M $KHCO_3$) for at least one day, and then in DI water for 7 to 8 hours. Hydroxide conductivities of methylated and non-methylated samples were measured and compared.

[Table 3]

| | $OH^-$, mS/cm |
|---|---|
| Pristine mPBI+Oligomer Membrane | 0.06 |
| 4-Day Methylated mPBI+Oligomer Membrane | 0.20 |
| 7-Day Methylated mPBI+Oligomer Membrane | 0.61 |

From the foregoing, a skilled person in the art to which the present invention pertains will be able to understand

that the present invention may be embodied in other specific forms without modifying the technical concepts or essential characteristics of the present invention. In this regard, the exemplary embodiments disclosed herein are only for illustrative purposes and should not be construed as limiting the scope of the present invention. The scope of the present invention is therefore indicated by the appended claims rather than by the foregoing description. All changes which come within the meaning and range of equivalency of the claims are to be embraced within the scope of the present invention.

**Claims**

1. A polymer comprising a polymer backbone based on polybenzimidazole or a derivative thereof,

    wherein 1% to 90% of the -NH- groups contained in the polymer backbone are substituted with a side chain comprising a cationic group; and
    the remaining 50% or more of the -NH- groups, which are not substituted with a side chain comprising a cationic group, among the -NH- groups contained in the polymer backbone, are substituted with a hydrocarbon chain that does not comprise any heteroatom of O, N, P, or S.

2. The polymer of claim 1, wherein the polymer is an anion-conductive polymer.

3. The polymer of claim 1, wherein the side chain comprising a cationic group comprises one or more unsubstituted or substituted imidazolium or quaternary ammonium groups.

4. The polymer of claim 3, wherein the side chain comprising a cationic group is a chain to which one or more of imidazolium, quaternary ammonium, or a combination thereof are directly linked; or one or more of imidazolium, quaternary ammonium, or a combination thereof are linked through $C_{1-6}$ alkyl or $C_{6-10}$ aryl-$C_{1-4}$ alkyl.

5. The polymer of claim 1, wherein the side chain comprising a cationic group comprises a halogen atom, which is substituted at one or both ends and allows intramolecular or intermolecular crosslinking.

6. The polymer of claim 1, wherein the hydrocarbon chain is $C_{1-6}$ alkyl or $C_{6-10}$ aryl-$C_{1-4}$ alkyl.

7. A membrane comprising the polymer of any one of claims 1 to 6.

8. The membrane of claim 7, wherein the membrane is conductive to anions.

9. A method for preparing the polymer of any one of claims 1 to 6, comprising:

    a first step, in which a side chain comprising a cationic group or a hydrocarbon chain that does not comprise any heteroatom of O, N, P, or S is introduced into the -NH- groups contained in the polymer backbone in the polymer based on polybenzimidazole or a derivative thereof; and
    a second step, in which a hydrocarbon chain that does not comprise any heteroatom of O, N, P, or S or a side chain comprising a cationic group is introduced into the remaining -NH- groups, among the -NH- groups contained in the polymer backbone, which are not substituted with the side chain comprising a cationic group or the hydrocarbon chain that does not comprise any heteroatom of O, N, P, or S.

10. The method of claim 9, comprising:

    a first' step, in which a side chain comprising a cationic group is introduced into the -NH- groups contained in the polymer backbone in the polymer based on polybenzimidazole or a derivative thereof; and
    a second' step, in which a hydrocarbon chain that does not comprise any heteroatom of O, N, P, or S is introduced into the remaining -NH- groups, among the -NH- groups contained in the polymer backbone, which are not substituted with the side chain comprising a cationic group.

11. The method of claim 10, wherein the hydrocarbon chain that does not comprise any heteroatom of O, N, P, or S is introduced into 50% or more of the remaining -NH- groups by the second' step.

12. The method of claims 9, wherein the introduction of a side chain comprising a cationic group into the -NH- groups contained in the polymer backbone is performed by reacting a polymer based on polybenzimidazole or a derivative

thereof with a compound, in which a reactive halide is substituted at one or both ends of a side chain comprising a cationic group.

**13.** The method of claim 10, wherein the second' step is performed by reacting the polymer, which is obtained from the first' step, with a halogenated hydrocarbon compound that does not comprise any heteroatom of O, N, P, or S in an amount of one equivalent or more based on the dry weight of the polymer under a basic condition.

**14.** Electrochemical systems equipped with the membrane of claim 7.

**15.** The electrochemical systems of claim 14, wherein the electrochemical systems are electrolyzers, fuel cells, or batteries.

[Fig. 1]

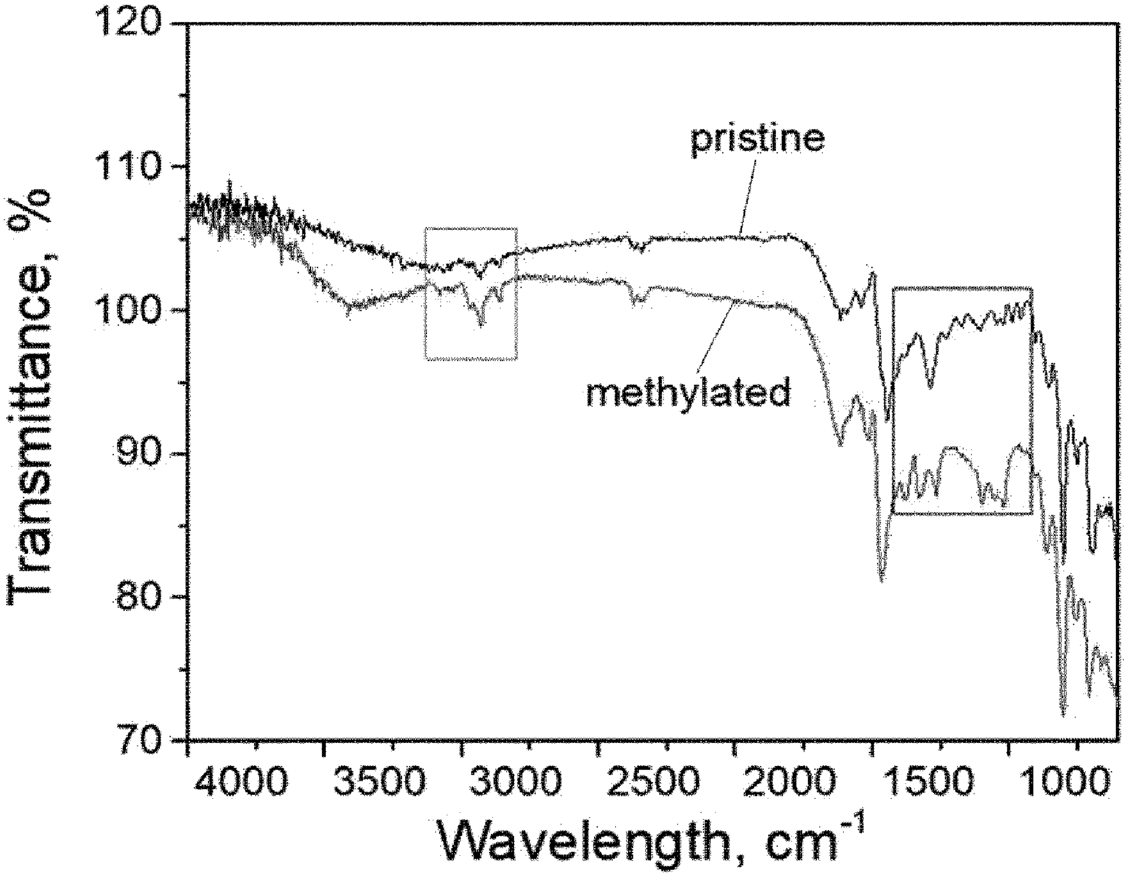
120
110
100
90
80
70
Transmittance, %
pristine
methylated
4000
3500
3000
2500
2000
1500
1000
Wavelength, cm-1

Europäisches Patentamt
European Patent Office
Office européen des brevets

# EUROPEAN SEARCH REPORT

Application Number
EP 22 15 3494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI-CHENG JHENG ET AL: "Quaternized polybenzimidazoles with imidazolium cation moieties for anion exchange membrane fuel cells", JOURNAL OF MEMBRANE SCIENCE, vol. 460, 12 March 2014 (2014-03-12), pages 160-170, XP055682770, NL ISSN: 0376-7388, DOI: 10.1016/j.memsci.2014.02.043 | 1-8,14, 15 | INV. C08G73/18 H01M8/083 H01M8/103 B01J41/13 |
| A | * figure 1 * * scheme 1 * * abstract * * section 3.3 * * table 3 * | 9-13 | |
| A | MAITY SUDHANGSHU ET AL: "N-alkyl polybenzimidazole: Effect of alkyl chain length", EUROPEAN POLYMER JOURNAL, PERGAMON PRESS LTD OXFORD, GB, vol. 49, no. 8, 6 June 2013 (2013-06-06), pages 2280-2292, XP028675113, ISSN: 0014-3057, DOI: 10.1016/J.EURPOLYMJ.2013.05.011 * abstract * * scheme 1 * | 1-15 | |
| | -/-- | | TECHNICAL FIELDS SEARCHED (IPC): C08G B01D H01M G01N B01J |

The present search report has been drawn up for all claims

1

| Place of search | Date of completion of the search | Examiner |
|---|---|---|
| Munich | 12 July 2022 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 15 3494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE YONA ET AL: "Polybenzimidazole membranes functionalised with 1-methyl-2-mesitylbenzimidazolium ions via a hexyl linker for use in vanadium flow batteries", POLYMER, vol. 174, 24 April 2019 (2019-04-24), pages 210-217, XP085700462, ISSN: 0032-3861, DOI: 10.1016/J.POLYMER.2019.04.048 * abstract * * scheme 1 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 12 July 2022 | Mader, Margarita |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *J. Power Sources,* 2020, vol. 451, 227813
- *J. Polym. Sci., Part A: Polym. Chem.,* 1993, vol. 31 (2), 553-561
- *Polymer,* 2019, vol. 174, 210-217